# EUROPEAN PATENT APPLICATION

(11) **EP 2 700 972 A1**
(43) Date of publication of application: **26.02.2014**
(21) Application number: 12799039.8
(22) Date of filing: 02.07.2012
(51) Int. Cl.: G01S 1/00

(54) **METHOD AND DEVICE FOR POSITIONING TERMINAL DEVICE**

(71) Applicant: Huawei Device Co., Ltd., Shenzhen, Guangdong 518129 (CN)
(72) Inventor: WEI, Konggang, Shenzhen, Guangdong 518129 (CN); ZHAO, Yu, Shenzhen, Guangdong 518129 (CN); ZHONG, Guanghua, Shenzhen, Guangdong 518129 (CN)
(74) Representative: Goddar, Heinz J.
(86) International application number: PCT/CN2012/078052
(87) International publication number: WO 2014/005266

(57) **Abstract**

The present invention is applicable to the field of GPS locating technologies and provides a method and an apparatus for locating a terminal device. The method includes: receiving information about starting a global positioning system; and obtaining a signal of a corresponding satellite currently in the sky according to pre-stored ephemeris data to implement locating. In embodiments of the present invention, ephemeris data is pre-stored before a terminal device starts GPS, so that after the terminal device starts GPS, corresponding satellites may be quickly determined according to the stored ephemeris data to implement quick locating, thereby effectively improving locating efficiency.

## Description

### FIELD OF THE INVENTION

The present invention relates to the field of GPS location technologies, and in particular, to a method and an apparatus for locating a terminal device.

### BACKGROUND OF THE INVENTION

Global positioning system (Global Positioning System, GPS) technologies are getting mature, and more and more terminal devices having GPS functions are available on the market. For a conventional GPS, the time to first locate (cold start) normally takes several minutes, or even more in areas with poor signals, which seriously affects locating efficiency.

The prior art compensates for the weakness of long time to first locate of a conventional GPS by using an assisted global positioning system (Assisted GPS, AGPS), where ephemeris data is obtained by using an AGPS server. When a terminal device starts GPS, ephemeris data about the sky above a current location of the terminal device is obtained from an AGPS server, and then a corresponding satellite is quickly found according to the ephemeris data, thereby implementing locating by signals received from the satellites. In the AGPS, only satellites above the terminal device are searched, which reduces the search scope and effectively shortens the locating time. However, it still takes several seconds for the conventional AGPS to perform locating, which still fails to meet user requirements of quick locating.

### SUMMARY OF THE INVENTION

Embodiments of the present invention provide a method for locating a terminal device to solve the problem of long time consumed for locating by a GPS in a terminal device in the prior art.

The embodiments of the present invention are implemented as follows: A method for locating a terminal device is provided, where the method includes:
receiving information about starting a global positioning system; and
obtaining a signal of a corresponding satellite currently in the sky according to pre-stored ephemeris data to implement locating.

The embodiments of the present invention further provide an apparatus for locating a terminal device, where the apparatus includes:
an information receiving unit configured to receive information about starting a global positioning system; and
a locating unit configured to: after the information receiving unit receives the information about starting the global positioning system, obtain a signal of a corresponding satellite currently in the sky according to pre-stored ephemeris data to implement locating.

Embodiments of the present invention further provide an apparatus for locating a terminal device, where the apparatus includes:
a receiver configured to receive information about starting a global positioning system; and
a processor configured to: after the receiver receives the information about starting the global positioning system, obtain a signal of a corresponding satellite currently in the sky according to pre-stored ephemeris data to implement locating.

Embodiments of the present invention further provide a terminal device, where the terminal device includes the apparatus for locating a terminal device described above.

According to the above technical solutions, in the embodiments of the present invention, ephemeris data is pre-stored before a terminal device starts GPS, so that after the terminal device starts GPS, it is no longer necessary to obtain ephemeris data, and corresponding satellites may be quickly found according to the stored ephemeris data to implement locating. Compared with the prior art, the embodiments of the present invention require no time for obtaining ephemeris data during a locating process, which obviously accelerates locating and shortens locating time, thereby implementing quick responding to a user's GPS request and greatly improving user experience.

### BRIEF DESCRIPTION OF THE DRAWINGS

To illustrate the technical solutions in the embodiments of the present invention more clearly, the following briefly describes the accompanying drawings required for describing the embodiments or the prior art. Apparently, the accompanying drawings in the following description merely show some embodiments of the present invention, and persons of ordinary skill in the art can derive other drawings from these accompanying drawings without creative efforts.
FIG. 1 is a flowchart of implementing a method for locating a terminal device according to an embodiment of the present invention;
FIG. 2 is a flowchart of implementing a method for locating a terminal device according to another embodiment of the present invention;
FIG. 3 is a structural diagram of an apparatus for locating a terminal device according to another embodiment of the present invention; and
FIG. 4 is a structural diagram of an apparatus for locating a terminal device according to still another embodiment of the present invention.

### DETAILED DESCRIPTION OF THE EMBODIMENTS

To make the objective, technical solution, and advantage of the present invention more comprehensible, the following describes the present invention in further detail with reference to the accompanying drawings and embodiments. It is understandable that the specific embodiments described herein are only used to explain the present invention and are not intended to limit the present invention.

In order to illustrate the technical solutions according to the present invention, illustration is provided below through specific embodiments.

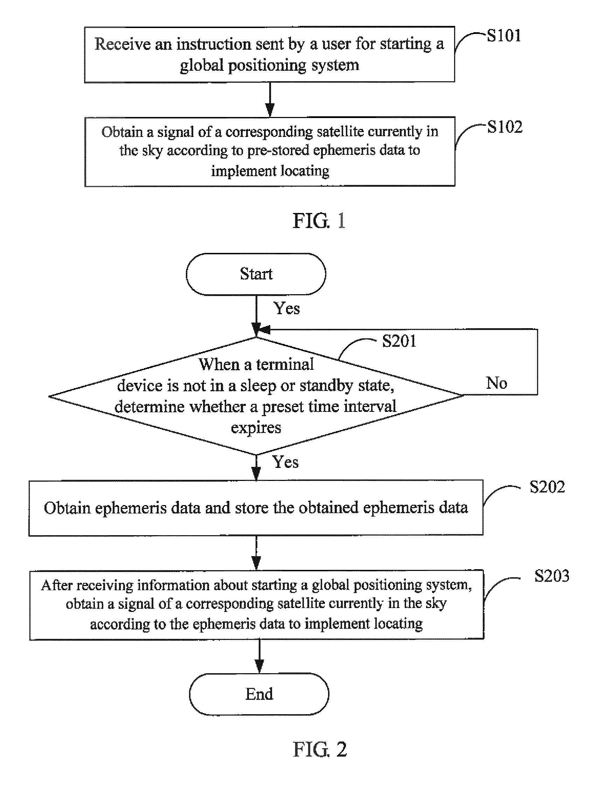

FIG. 1 shows a process of implementing a method for locating a terminal device according to an embodiment of the present invention. The process of the method is described in detail as follows: In step S101, information about starting a global positioning system is received.

In this embodiment, the global positioning system includes but is not limited to a Galileo system and a BeiDou (Compass) system. The information includes but is not limited to a startup instruction sent by a user or trigger information generated at preset startup time.

In step S102, a signal of a corresponding satellite currently in the sky is obtained according to pre-stored ephemeris data to implement locating.

In this embodiment, ephemeris data is pre-stored before the GPS is started. After the GPS is started, satellites (at least three satellites) currently in the sky corresponding to the terminal device are quickly determined according to pre-stored latest ephemeris data and signals of the satellites are obtained to implement locating. The ephemeris data includes satellite numbers (at least three), parameters used for describing satellite locations and speeds, and orbit information about satellite movements. For a satellite, there is a mapping relationship between the satellite number, the parameters describing the satellite location and speed, and the orbit information about satellite movements. It should be noted that in this embodiment, the pre-stored ephemeris data is ephemeris data about the sky above a current location (which is normally a location of a base station nearest to the terminal device) of the terminal device.

A specific process of obtaining a signal of a corresponding satellite currently in the sky according to the ephemeris data to implement locating may be implemented by using the prior art. For example, the terminal device determines a corresponding satellite currently in the sky according to the ephemeris data, receives a signal of the satellite, demodulates the signal, calculates a pseudo distance between the terminal device and the satellite according to the signal, and sends the calculated pseudo distance to a location server; the location server calculates an exact location of the terminal device according to the pseudo distance together with other information (such as information about differential GPS benchmark stations), and sends the exact location to the terminal device.

According to a preferred embodiment of the present invention, before the step of receiving information about starting a global positioning system, the method further includes:
obtaining ephemeris data at a preset time interval and storing the obtained ephemeris data.

In this embodiment, ephemeris data is obtained at a preset time interval. For example, ephemeris data is obtained every hour. When the obtained ephemeris data is stored, all obtained ephemeris data may be stored or only latest ephemeris data is stored. All obtained ephemeris data is stored for the purpose of comparing latest ephemeris data with historical ephemeris data to facilitate subsequent analysis. For example, a current location (such as Shanghai or Beijing) of a terminal device is determined according to the difference between ephemeris data. The latest ephemeris data is stored for the purpose of saving a storage space of the terminal device.

It should be noted that in this embodiment, the obtained ephemeris data is ephemeris data about the sky above the current location of the terminal device. Location information of the terminal device may be obtained by using the prior art. For example, a mobile terminal sends a request for obtaining ephemeris data to an AGPS server through a base station; the AGPS determines a current location of the mobile terminal according to longitude and latitude information recorded in the base station, that is, uses a location of the base station as the current location (such as Shanghai or Beijing) of the terminal device, and sends ephemeris data about the sky above the current location of the mobile terminal (for example, ephemeris data about the Shanghai area or ephemeris data about the Beijing area) to the terminal device.

In this embodiment, ephemeris data is obtained at a time interval instead of at fixed time because if fixed time is set, attention needs to be paid to current time all the time, the current time and the fixed time are compared, and ephemeris data is obtained when the current time is equal to the fixed time. However, when the time interval is set, it is not necessary to pay attention to the current time, and ephemeris data is obtained when the set time interval expires.

In the embodiment of the present invention, before a terminal device starts GPS, ephemeris data is downloaded and stored in the terminal device at a preset time interval, so that after the terminal device starts GPS, corresponding satellites may be quickly determined according to the stored latest ephemeris data to implement locating. Compared with the prior art, in the embodiment of the present invention, locating is obviously accelerated and the locating time is shortened, thereby quick responding to a user's GPS request is implemented and user experience is greatly improved. FIG 2 shows a process of implementing a method for locating a terminal device according to another embodiment of the present invention. The process of the method is described in detail as follows:
In step S201, when a terminal device is not in a sleep or standby state, whether a preset time interval expires is determined; if a determining result is "yes", step S202 is executed; and if the determining result is "no", waiting continues until the preset time interval expires.
In step S202, if the preset time interval expires, ephemeris data is obtained and the obtained ephemeris data is stored.
In step S203, after information indicating that a user starts a global positioning system GPS of the terminal device is received, a signal of a corresponding satellite currently in the sky is obtained according to the stored latest ephemeris data to implement locating. According to another preferred embodiment of the present invention, to save data traffic and avoid power consumption of an application, the method further includes:
   when the terminal device is in a sleep or standby state, stopping obtaining ephemeris data (that is, an application of the terminal device for obtaining ephemeris data is closed) and recording time when ephemeris data is obtained last time.

According to another preferred embodiment of the present invention, the method further includes:
when the terminal device is started from the sleep or standby state, obtaining a first time interval, where the first time interval is a difference between current startup time of the terminal device and time when ephemeris data is obtained last time, and determining whether the first time interval is greater than or equal to the preset time interval;
if yes, obtaining ephemeris data; and
if no, modifying time for obtaining ephemeris data next time according to the first time interval, where the time for obtaining ephemeris data next time is a difference between the preset time interval and the first time interval.

In this embodiment, to ensure that ephemeris data is timely updated, time in which the terminal device is in the sleep or standby state needs to be included in the time interval.

For example, in the above process, assume that a time interval is set to 60 minutes. Before the terminal device enters the sleep or standby state, ephemeris data is obtained last time at 7:00. At 7:20, the terminal device enters the sleep or standby state and the sleep or standby time is 30 minutes. After 30 minutes, the terminal device is started. Because the time when the terminal device is in the sleep or standby state needs to be included, the first time interval is (7:20 - 7:00) + 30 = 50 minutes, and time for obtaining ephemeris data next time is modified to (60 - 50) = 10 minutes later (initial time for obtaining ephemeris data next time is 60 minutes later).

According to another preferred embodiment of the present invention, if the preset time interval expires, the obtaining the ephemeris data specifically further includes:
determining whether current time for obtaining ephemeris data is within a specific time range;
if no, obtaining ephemeris data;
if yes, determining whether it is set not to obtain ephemeris data within the specific time range;
if no, obtaining ephemeris data;
if yes, obtaining a second time interval and determining whether the second time interval is greater than or equal to the preset time interval, where the second time interval is a difference between time when the specific time range ends and time when ephemeris data is obtained last time; and
if yes, starting obtaining ephemeris data at a moment when the specific time range ends.

The specific time range may be set according to the user's actual situation, for example, from 00:00 to 06:00.

The above process is described by using an example as follows:
Assume that a time interval for obtaining ephemeris data is 60 minutes and a specific time range is from 00:00 to 06:00. At 00:00 of system time, because ephemeris data is obtained last time 60 minutes earlier (23:00), according to the preset time interval, the terminal device should obtain ephemeris data at 00:00. However, because the specific time range 00:00 to 06:00 is set in advance (the specific time range is set according to daily schedules of common people, and according to a relevant questionnaire survey, users are least probable to use the GPS for locating from 00:00 to 06:00), it is necessary to determine whether the user sets not to obtain ephemeris data within the specific time range. If yes, ephemeris data will not be obtained until 06:00 (because the second time interval (06:00 - 23:00 = 420 minutes) is greater than the preset time interval; otherwise, ephemeris data is directly obtained.

Preferably, this embodiment further includes:
when the second time interval is smaller than the preset time interval, modifying the time for obtaining ephemeris data next time according to the second time interval, where the modified time for obtaining ephemeris data next time is a difference between the preset time interval and the second time interval, and the second time interval is a difference between time when the specific time range ends and time when ephemeris data is obtained last time.

For example, assume that: a time interval for obtaining ephemeris data is 60 minutes, time when ephemeris data is obtained last time is 23:50, and a specific time range is 00:00 to 00:30. At 00:30 of system time, a second time interval is obtained, where the second time interval is (00:00 - 23 :50) + 30 = 40 minutes, which is smaller than the preset time interval; time for obtaining ephemeris data next time is modified according to the second time interval, where the time for obtaining ephemeris data next time is a difference between the preset time interval 60 minutes and the second time interval, that is 60 - 40 = 20 minutes later (initial time for obtaining ephemeris data next time is 60 minutes later), and ephemeris data will be obtained at 00:50.

It should be noted that when the specific time range is greater than or equal to the preset time interval and it is set not to obtain ephemeris data within the specific time range, ephemeris data is obtained at a moment when the specific time range ends.

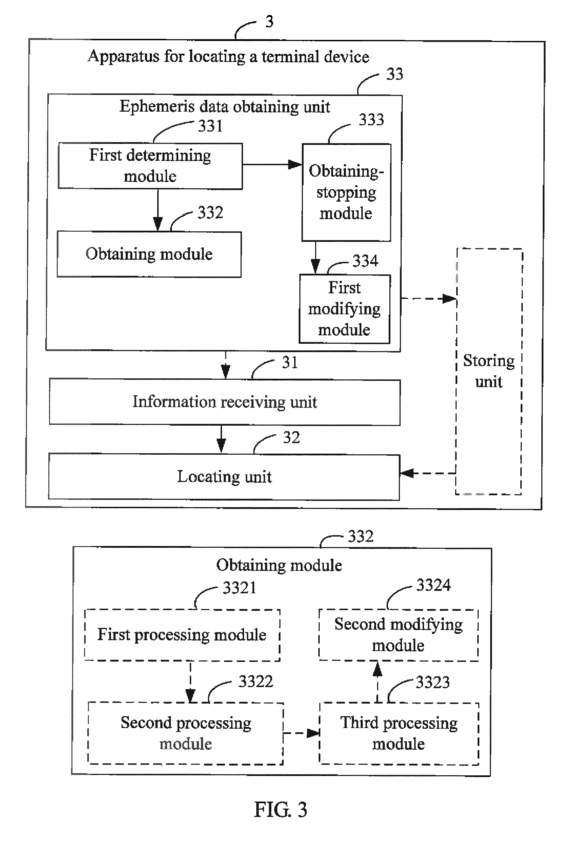

To enhance practicability of the present invention, save data traffic, and avoid unnecessary power consumption by an application for obtaining ephemeris data, in embodiments of the present invention, time for obtaining ephemeris data is limited or modified according to various aspects (for example, when a terminal device is in a sleep or standby state, or a specific time range), thereby accomplishing a purpose of saving resources and timely updating ephemeris data at the same time. FIG. 3 shows a structure of an apparatus for locating a terminal device according to another embodiment of the present invention. For the convenience of description, only parts related to the embodiment of the present invention are shown.

The apparatus for locating a terminal device may run on a software unit, a hardware unit, or a unit combining software and hardware in various terminal devices (such as a mobile phone and an IPAD).

The apparatus 3 for locating a terminal device includes an information receiving unit 31 and a locating unit 33 whose specific functions are as follows:
The information receiving unit 31 is configured to receive information about starting a global positioning system.

The locating unit 32 is configured to: after the information receiving unit 31 receives the information about starting the global positioning system, obtain a signal of a corresponding satellite currently in the sky according to pre-stored ephemeris data to implement locating.

Further, the apparatus further includes:
an ephemeris data obtaining unit 33 configured to obtain ephemeris data according to a preset time interval; and
a storing unit 34 configured to store the ephemeris data obtained by the ephemeris data obtaining unit 33.

Further, the ephemeris data obtaining unit 33 includes:
a first determining module 331 configured to: when the terminal device is not in a sleep or standby state, determine whether the preset time interval expires; and
an obtaining module 332 configured to: when a determining result of the first determining module 331 is yes, obtain the ephemeris data.

Further, the ephemeris data obtaining unit 33 further includes:
an obtaining-stopping module 333 configured to: when the terminal device is in a sleep or standby state, stop obtaining ephemeris data, and record time when ephemeris data is obtained last time; and
a first modifying module 334 configured to: when the terminal device is started from the sleep or standby state, obtain a first time interval and determine whether the first time interval is greater than or equal to the preset time interval; and if yes, obtain ephemeris data by using the obtaining module; if no, modify time for obtaining ephemeris data next time according to the first time interval, where the modified time for obtaining the ephemeris data next time is a difference between the preset time interval and the first time interval, and the first time interval is a difference between current startup time of the terminal device and time when ephemeris data is obtained last time.

Further, the obtaining module 332 includes:
a first processing module 3321 configured to: when the preset time interval expires, determine whether current time for obtaining ephemeris data is within a specific time range, and if no, obtain ephemeris data;
a second processing module 3322 configured to: when the current time for obtaining ephemeris data is within the specific time range, determine whether it is set not to obtain ephemeris data within the specific time range; and if no, obtain ephemeris data;
a third processing module 3323 configured to: when it is set not to obtain ephemeris data within the specific time range, obtain a second time interval and determine whether the second time interval is greater than or equal to the preset time interval; and if yes, start obtaining ephemeris data at a moment when the specific time range ends, where the second time interval is a difference between time when the specific time range ends and time when ephemeris data is obtained last time; and
a second modifying module 3324 configured to: when the second time interval in the third processing module is smaller than the preset time interval, modify the time for obtaining ephemeris data next time according to the second time interval, where the modified time for obtaining ephemeris data next time is a difference between the preset time interval and the second time interval.

The apparatus for locating a terminal device according to this embodiment may be used in corresponding methods for locating a terminal device. Reference may be made to relevant descriptions in the embodiments of the method for locating a terminal device, and details are omitted herein.

Persons of ordinary skill in the art may understand that units and modules included in the embodiment 3 are divided according to functional logic, but are not limited to the above division as long as corresponding functions are implemented. In addition, specific names of the functional units and modules are only for differentiating from each other and are not used to limit the protection scope of the present invention.

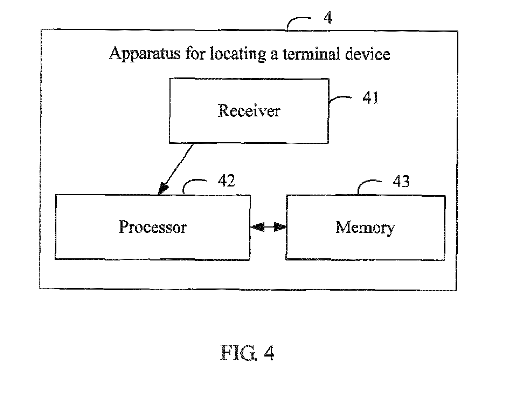

FIG. 4 shows a structure of an apparatus for locating a terminal device according to another embodiment of the present invention. For the convenience of description, only parts related to the embodiment of the present invention are shown.

The apparatus for locating a terminal device may run on a hardware unit in various terminal devices (such as a mobile phone and an IPAD).

The apparatus 4 for locating a terminal device includes a receiver 41 and a processor 42.

The receiver 41 is configured to receive information about starting a global positioning system.

The processor 42 is configured to: after the receiver 41 receives the information about starting the global positioning system, obtain a signal of a corresponding satellite currently in the sky according to pre-stored ephemeris data to implement locating.

Further, the processor 42 is configured to obtain ephemeris data at a preset time interval and send the obtained ephemeris data to a memory 43 for storing.

The apparatus 4 further includes:
the memory 43 configured to store the ephemeris data obtained at the preset time interval by the processor 42.

Further, the processor 42 is configured to obtain ephemeris data at a preset time interval, which specifically is: determining whether the terminal device is in a sleep or standby state; when the terminal device is not in the sleep or standby state, determining whether the preset time interval expires; and obtaining ephemeris data when the preset time interval expires.

Further, the processor 42 is configured to determine whether the terminal device is in a sleep or standby state, which specifically is: when the terminal device is in the sleep or standby state, stopping obtaining ephemeris data, and recording time when ephemeris data is obtained last time; when the terminal device is started from the sleep or standby state, obtaining a first time interval; determining whether the first time interval is greater than or equal to the preset time interval; if yes, obtaining ephemeris data; if no, modifying time for obtaining ephemeris data next time according to the first time interval, where the modified time for obtaining ephemeris data next time is a difference between the preset time interval and the first time interval, and the first time interval is a difference between current startup time of the terminal device and time when ephemeris data is obtained last time.

Further, the processor 42 is configured to determine whether the preset time interval expires, which specifically is: when the preset time interval expires, determining whether current time for obtaining ephemeris data is within a specific time range; and if no, obtaining ephemeris data.

Further, the processor 42 is configured to determine whether the current time for obtaining ephemeris data is within a specific time range, which specifically is: when the current time for obtaining ephemeris data is within the specific time range, determining whether it is set not to obtain ephemeris data within the specific time range; and if no, obtaining ephemeris data.

Further, the processor 42 is configured to determine whether it is set not to obtain ephemeris data within the specific time range, which specifically is: when it is set not to obtain ephemeris data within the specific time range, obtaining a second time interval; when the second time interval is greater than or equal to the preset time interval, starting obtaining ephemeris data at a moment when the specific time range ends, where the second time interval is a difference between time when the specific time range ends and time when ephemeris data is obtained last time.

Further, the processor 42 is configured to determine whether it is set not to obtain ephemeris data within the specific time range, which specifically is: when it is set not to obtain ephemeris data within the specific time range, obtaining a second time interval; and when the second time interval is smaller than the preset time interval, modifying time for obtaining ephemeris data next time according to the second time interval, where the modified time for obtaining ephemeris data next time is a difference between the preset time interval and the second time interval, and the second time interval is a difference between time when the specific time range ends and time when ephemeris data is obtained last time.

The apparatus for locating a terminal device according to this embodiment may be used in corresponding methods for locating a terminal device. Reference may be made to relevant descriptions in the embodiments of the method for locating a terminal device, and details are omitted herein.

In summary, in the embodiments of the present invention, ephemeris data is pre-stored before a terminal device starts GPS, so that after the terminal device starts GPS, corresponding satellites may be quickly determined according to the stored latest ephemeris data to implement quick locating. Compared with the prior art, the embodiments of the present invention obviously accelerate locating and shorten the locating time, thereby implementing quick responding to a user's locating request during using GPS and greatly improving user experience. Furthermore, to enhance practicability of the present invention, save data traffic, and avoid unnecessary power consumption by an application for obtaining ephemeris data, in the embodiments of the present invention, time for obtaining ephemeris data is limited or modified according to various aspects (for example, when the terminal is in a sleep or standby state or in a specific time range), thereby accomplishing a purpose of saving resources and timely updating ephemeris data at the same time.

Persons of ordinary skill in the art may also understand that all or a part of the steps of the method according to the embodiments may be implemented by a program instructing relevant hardware. The program may be stored in a computer readable storage medium, and the storage medium may be a ROM/RAM, a magnetic disk, or a CD-ROM, and so on.

The foregoing descriptions are merely exemplary embodiments of the present invention, but are not intended to limit the present invention. All modifications, equivalent replacements, and improvements made without departing from the spirit and principle of the present invention shall fall within the protection scope of the present invention.

## Claims

1. A method for locating a terminal device, wherein the method comprises:
receiving information about starting a global positioning system; and
obtaining a signal of a corresponding satellite currently in the sky according to pre-stored ephemeris data to implement locating.

2. The method according to claim 1, wherein before the step of receiving information about starting a global positioning system, the method further comprises:
obtaining ephemeris data at a preset time interval and storing the obtained ephemeris data.

3. The method according to claim 2, wherein the obtaining ephemeris data at a preset time interval comprises:
when the terminal device is not in a sleep or standby state, determining whether the preset time interval expires; and
if the preset time interval expires, obtaining ephemeris data.

4. The method according to claim 2 or 3, wherein the method further comprises:
when the terminal device is in the sleep or standby state, stopping obtaining ephemeris data, and recording time when ephemeris data is obtained last time;
when the terminal device is started from the sleep or standby state, obtaining a first time interval and determining whether the first time interval is greater than or equal to the preset time interval;
if yes, obtaining ephemeris data; and
if no, modifying time for obtaining ephemeris data next time according to the first time interval, wherein the modified time for obtaining ephemeris data next time is a difference between the preset time interval and the first time interval;
wherein the first time interval is a difference between current startup time of the terminal device and time when ephemeris data is obtained last time.

5. The method according to claim 3 or 4, wherein the obtaining ephemeris data if the preset time interval expires comprises:
when the preset time interval expires, determining whether current time for obtaining ephemeris data is within a specific time range; and
if no, obtaining ephemeris data.

6. The method according to claim 5, wherein the method further comprises:
when the current time for obtaining ephemeris data is within the specific time range, determining whether it is set not to obtain ephemeris data within the specific time range; and
if no, obtaining ephemeris data.

7. The method according to claim 6, wherein the method further comprises:
when it is set not to obtain ephemeris data within the specific time range, obtaining a second time interval and determining whether the second time interval is greater than or equal to the preset time interval; and
if yes, starting obtaining ephemeris data at a moment when the specific time range ends, wherein the second time interval is a difference between time when the specific time range ends and time when ephemeris data is obtained last time.

8. The method according to claim 7, wherein the method further comprises:
when the second time interval is smaller than the preset time interval, modifying the time for obtaining ephemeris data next time according to the second time interval, wherein the modified time for obtaining ephemeris data next time is a difference between the preset time interval and the second time interval.

9. An apparatus for locating a terminal device, wherein the apparatus comprises:
an information receiving unit configured to receive information about starting a global positioning system; and
a locating unit configured to: after the information receiving unit receives the information about starting the global positioning system, obtain a signal of a corresponding satellite currently in the sky according to pre-stored ephemeris data to implement locating.

10. The apparatus according to claim 9, wherein the apparatus further comprises:
an ephemeris data obtaining unit configured to obtain ephemeris data at a preset time interval; and
a storing unit configured to store the ephemeris data obtained by the ephemeris data obtaining unit.

11. The apparatus according to claim 10, wherein the ephemeris data obtaining unit comprises:
a first determining module configured to: when the terminal device is not in a sleep or standby state, determine whether the preset time interval expires; and
an obtaining module configured to: when a determining result of the first determining module is yes, obtain ephemeris data.

12. The apparatus according to claim 11, wherein the ephemeris data obtaining unit further comprises:
an obtaining-stopping module configured to: when the terminal device is in the sleep or standby state, stop obtaining ephemeris data, and record time when ephemeris data is obtained last time; and
a first modifying module configured to: when the terminal device is started from the sleep or standby state, obtain a first time interval and determine whether the first time interval is greater than or equal to the preset time interval; if yes, obtain ephemeris data by using the obtaining module; and if no, modify time for obtaining ephemeris data next time according to the first time interval, wherein the modified time for obtaining the ephemeris data next time is a difference between the preset time interval and the first time interval, and the first time interval is a difference between current startup time of the terminal device and time when ephemeris data is obtained last time.

13. The apparatus according to claim 11 or 12, wherein the obtaining module further comprises:
a first processing module configured to: when the preset time interval expires, determine whether current time for obtaining ephemeris data is within a specific time range, and if no, obtain ephemeris data; and
a second processing module configured to: when the current time for obtaining ephemeris data is within the specific time range, determine whether it is set not to obtain ephemeris data within the specific time range; and if no, obtain ephemeris data.

14. The apparatus according to claim 13, wherein the obtaining module further comprises:
a third processing module configured to: when it is set not to obtain ephemeris data within the specific time range, obtain a second time interval and determine whether the second time interval is greater than or equal to the preset time interval; and if yes, start obtaining ephemeris data at a moment when the specific time range ends, wherein the second time interval is a difference between time when the specific time range ends and time when ephemeris data is obtained last time.

15. The apparatus according to claim 14, wherein the obtaining module further comprises:
a second modifying module configured to: when the second time interval in the third processing module is smaller than the preset time interval, modify the time for obtaining ephemeris data next time according to the second time interval, wherein the modified time for obtaining ephemeris data next time is a difference between the preset time interval and the second time interval.

16. An apparatus for locating a terminal device, wherein the apparatus comprises:
a receiver configured to receive information about starting a global positioning system; and
a processor configured to: after the receiver receives the information about starting the global positioning system, obtain a signal of a corresponding satellite currently in the sky according to pre-stored ephemeris data to implement locating.

17. The apparatus according to claim 16, wherein the processor is further configured to obtain ephemeris data at a preset time interval and send the obtained ephemeris data to a memory for storing;
and the apparatus further comprises:
the memory configured to store the ephemeris data obtained by the processor at the preset time interval.

18. The apparatus according to claim 16 or 17, wherein the obtaining, by the processor, the ephemeris data at the preset time interval specifically comprises: determining whether the terminal device is in a sleep or standby state; and when the terminal device is not in the sleep or standby state, determining whether the preset time interval expires, and obtaining ephemeris data when the preset time interval expires.

19. The apparatus according to claim 18, wherein the processor is further configured to: when the terminal device is in the sleep or standby state, stop obtaining ephemeris data, and record time when ephemeris data is obtained last time; when the terminal device is started from the sleep or standby state, obtain a first time interval and determine whether the first time interval is greater than or equal to the preset time interval; if yes, obtain ephemeris data; if no, modify time for obtaining ephemeris data next time according to the first time interval, wherein the modified time for obtaining ephemeris data next time is a difference between the preset time interval and the first time interval, and the first time interval is a difference between current startup time of the terminal device and time when ephemeris data is obtained last time.

20. The apparatus according to claim 18, wherein the obtaining, by the processor, the ephemeris data when the preset time interval expires specifically comprises: when the preset time interval expires, determining whether current time for obtaining ephemeris data is within a specific time range; and if no, obtaining ephemeris data.

21. The apparatus according to claim 20, wherein the processor is further configured to: when the current time for obtaining ephemeris data is within the specific time range, determine whether it is set not to obtain ephemeris data within the specific time range; and if no, obtain ephemeris data.

22. The apparatus according to claim 21, wherein the processor is further configured to: when it is set not to obtain ephemeris data within the specific time range, obtain a second time interval; when the second time interval is greater than or equal to the preset time interval, start obtaining ephemeris data at a moment when the specific time range ends, wherein the second time interval is a difference between time when the specific time range ends and time when ephemeris data is obtained last time.

23. The apparatus according to claim 21, wherein the processor is further configured to: when it is set not to obtain ephemeris data within the specific time range, obtain a second time interval; and when the second time interval is smaller than the preset time interval, modify time for obtaining ephemeris data next time according to the second time interval, wherein the modified time for obtaining ephemeris data next time is a difference between the preset time interval and the second time interval, and the second time interval is a difference between time when the specific time range ends and time when ephemeris data is obtained last time.

24. A terminal device, wherein the terminal device comprises the apparatus for locating a terminal device according to any one of claims 9 to 15 or the apparatus for locating a terminal device according to any one of claims 16 to 23.
